# EUROPÄISCHE PATENTANMELDUNG

(11) **EP 4 328 108 A1**
(43) Veröffentlichungstag der Anmeldung: **28.02.2024**
(21) Anmeldenummer: 22191601.8
(22) Anmeldetag: 23.08.2022
(51) Int. Cl.: B61C 3/00, B61C 17/02

(54) **SCHIENENFAHRZEUG UMFASSEND EIN POWERPACK MIT EINER BRENNSTOFFZELLE UND EINEM BRENNSTOFFTANK**

(71) Anmelder: Stadler Rail AG, 9565 Bussnang (CH)
(72) Erfinder: Jenni, Stefan, 8400 Winterthur (CH); Wagnière, Marc, 8408 Winterthur (CH); Suter, Fabian, 9565 Rothenhausen (CH); Kägi, Thomas, 9443 Widnau (CH); Schmid, Beat, 8593 Kesswil (CH); Bernsdorf, Stefan, 8406 Winterthur (CH); Weber, Markus, 9475 Sevelen (CH); Jones, Robert, 6850 Dornbirn (AT); Tho, Chee Wee, 8052 Zürich (CH); Williams, David, 8575 Bürglen (CH)
(74) Vertreter: Hepp Wenger Ryffel AG

(57) **Zusammenfassung**

Die Erfindung betrifft ein Schienenfahrzeug (1), welches einen ersten Passagierwagen sowie ein Powerpack (2) mit einer Brennstoffzelle (20) und einem Brennstofftank (21) umfasst. Das Powerpack (2) und der Passagierwagen sind miteinander gekoppelt. Das Powerpack (2) ist auf mindestens einem Drehgestell gelagert. Das Powerpack (2) umfasst keine Passagiersitzplätze. Das Schienenfahrzeug (1) umfasst mindestens ein angetriebenes Drehgestell, welches mit elektrischer Energie von der Brennstoffzelle versorgbar ist.

## Beschreibung

Die vorliegende Erfindung betrifft ein Schienenfahrzeug umfassend ein Powerpack mit einer Brennstoffzelle und einem Brennstofftank.

Schienenfahrzeuge mit einem Brennstoffzellenantrieb sind an sich bekannt. EP 3 078 561 offenbart beispielsweise ein Schienenfahrzeug mit einem Brennstoffzellenantrieb. Der zum Betrieb benötigte Brennstoff befindet sich in Tanks, welche über das Schienenfahrzeug verteilt angeordnet sind. Dadurch werden lange Brennstoffleitungen und brennstoffführende Übergänge zwischen einzelnen Wagen des Schienenfahrzeugs benötigt. Dies hat zur Folge, dass die Übergänge, welche sich an den beweglichen Wagenübergängen befinden, aufwendig konstruiert und gewartet werden müssen und deshalb teuer sind. Ausserdem stellen die brennstoffführenden Übergänge ein Sicherheitsrisiko dar. Der Brennstoff in Leitungen weist einen hohen Druck auf. Bei einem Unfall können die brennstoffführenden Übergänge leckschlagen und der hochentzündliche Brennstoff, welcher unter einem hohen Druck steht, tritt aus. Durch den Austritt des Brennstoffs mit einem hohen Druck bzw. einer hohen Geschwindigkeit können Menschen verletzt werden. Ausserdem ist es möglich, dass sich der austretende Brennstoff entzündet und so Menschen verletzt.

Bekannt sind auch Brennstofftanks, welche auf dem Dach eines Schienenfahrzeugs angeordnet sind. Auf dem Dach eines Schienenfahrzeuges kann aus konstruktiven und fahrdynamischen Gründen nur eine bestimmte Menge an Gewicht angeordnet werden. Ausserdem ist der Platz auf dem Dach eines Schienenfahrzeuges stark eingeschränkt, weil die Oberleitung auf einer gewissen Höhe angebracht ist und zwischen der Schienenoberkante und der Oberleitung möglichst viel Platz für Passagiere oder Güter zur Verfügung stehen soll. Dies führt dazu, dass die Menge an Brennstoff, welche auf dem Dach eines Schienenfahrzeuges mitgeführt werden kann, beschränkt ist. Selbst wenn auf dem Dach des Schienenfahrzeugs Brennstofftanks angeordnet werden, steht der Platz auf dem Dach nicht für andere Gerätschaften zur Verfügung. Es nicht möglich oder zumindest äusserst unvorteilhaft und konstruktiv aufwändig, bei einem bimodalen Schienenfahrzeug Brennstofftanks und einen Stromabnehmer auf dem Dach zu installieren. Ausserdem weist ein Schienenfahrzeug mit auf dem Dach angeordneten Brennstofftanks ein ungünstiges Kollisionsverhalten auf.

Es ist die Aufgabe der Erfindung, die Nachteile des Stands der Technik zu überwinden und insbesondere ein Schienenfahrzeug mit Brennstoffzellenantrieb zu schaffen, welches eine hohe Sicherheit bei gleichzeitig vereinfachter Bauweise aufweist.

Die Aufgabe wird durch ein Schienenfahrzeug gemäss dem unabhängigen Anspruch gelöst.

Insbesondere wird die Aufgabe gelöst durch ein Schienenfahrzeug umfassend einen ersten Passagierwagen und ein Powerpack mit einer Längsachse, wobei das Powerpack und der Passagierwagen miteinander gekoppelt sind. Das Powerpack weist zumindest eine Brennstoffzelle und zumindest einen Brennstofftank mit einem Brennstofftankventil auf. Das Powerpack ist auf mindestens einem Drehgestell gelagert. Insbesondere umfasst das Powerpack keine Passagiersitzplätze. Das Schienenfahrzeug umfasst mindestens ein angetriebenes Drehgestell, welches mit elektrischer Energie von der Brennstoffzelle versorgbar ist.

Ein solches Schienenfahrzeug mit einem Powerpack weist ein besonders günstiges Crashverhalten bei einer Kollision auf. Insbesondere wenn sich das Schienenfahrzeug überschlägt oder nach einer Kollision um seine Längsachse rollt (Roll Over Crashszenario) ist die Anordnung der Brennstoffzelle und des Brennstofftanks in einem Powerpack vorteilhaft. Ausserdem ist die Sicherheit erhöht, da nur sehr kurze Brennstoffleitungen notwendig sind und an den Wagenübergängen keine Brennstoffleitungen notwendig sind. Selbstverständlich können sich an den Wagenübergängen elektrische Leitungen befinden. Ausserdem kann die Leistung und die Reichweite eines solchen Schienenfahrzeuges gut skaliert werden. So können in dem Powerpack bei Bedarf mehr Brennstoffzellen und/oder mehr Brennstofftanks ausgebildet werden.

Die Verbindung zwischen den Brennstofftanks und den Brennstoffzellen kann durch die Anordnung von sowohl den Brennstofftanks als auch den Brennstoffzellen in einem Powerpack kurz ausgebildet werden.

Das Powerpack nimmt sowohl die Brennstofftanks als auch die Brennstoffzellen inklusive Hilfsaggregate auf. Dies bedeutet, dass sich auf den anderen Zugteilen (Wagen) keine Brennstofftanks sowie keine Brennstoffzellen befinden. Die anderen Zugteile können somit im Wesentlichen wie bei einem herkömmlichen Zug ausgebildet sein. Für den Betrieb eines Schienenfahrzeugs mit einer Brennstoffzelle muss so lediglich das Powerpack ausgetauscht, modifiziert oder ergänzt werden.

Das Schienenfahrzeug umfasst mindestens einen Passagierwagen. Passagierwagen bedeutet, dass der Passagierwagen zur Aufnahme von Passagieren vorgesehen und mit den entsprechenden Einrichtungen wie beispielsweise Sitzplätzen, Toiletten und/oder Türen ausgestattet ist. Das Powerpack ist nicht für den Aufenthalt von Passagieren bestimmt. Allerdings kann das Powerpack so ausgebildet sein, dass sich Passagiere durch das Powerpack von einem Wagen vor dem Powerpack zu einem Wagen hinter dem Powerpack bewegen können. Es ist selbstverständlich möglich, dass Passagiere auch im Bereich des Powerpacks stehen, gehen oder sich aufhalten, beispielsweise in einem Mittelgang. Allerdings ist das Powerpack nicht für den dauerhaften Aufenthalt von Passagieren bestimmt. Dies bedeutet, dass in dem Powerpack keine Vorrichtungen für den dauerhaften Aufenthalt von Passagieren (z.B. Sitzplätze) vorgesehen sind.

Das Schienenfahrzeug kann einen oder mehrere Passagierwagen aufweisen. Die Passagierwagen können Endwagen oder Mittelwagen sein. Der Antrieb des Schienenfahrzeugs kann über den ersten und/oder letzten Wagen (Endwagen) des Schienenfahrzeugs erfolgen. Angetriebenen Wagen sind mit einer Traktionsausrüstung ausgestattet, welche insbesondere die üblichen Komponenten der Traktionskette wie Antriebsmotor, Stromrichter und dergleichen aufweist. Dabei erfolgt der Antrieb bevorzugt mindestens über das erste und/oder das letzte Drehgestell des Fahrzeugs. Es ist auch möglich, dass der Antrieb über mehrere Drehgestelle erfolgt, welche keine Enddrehgestelle sein müssen. Die angetriebenen Wagen können mit Traktionsbatterien und Hilfsbetrieben ausgestattet sein. Die Traktionsbatterien oder Hilfsbetriebe können auf dem Dach oder unterflurig angeordnet sein. Es ist möglich, dass die Traktionsausrüstung in den Endwagen oder verteilt angeordnet ist. Die Traktionsbatterien und Hilfsbetriebe können über die Brennstoffzelle mit Energie versorgt werden.

Es ist möglich, dass das Schienenfahrzeug mehrere Powerpacks umfasst. Ein oder mehrere Powerpacks können somit mit einer Vielzahl von Passagierwagen kombiniert werden.

Es ist möglich, dass das Schienenfahrzeug ein Powerpack sowie zwei angetriebene Endwagen sowie weitere Mittelwagen aufweist. Die Mittelwagen können angetrieben oder nicht angetrieben sein.

Die Mittelwagen können mit technischer Ausrüstung, beispielsweise mit Batterien, ausgestattet sein.

Das Schienenfahrzeug kann so ausgebildet sein, dass das Powerpack zumindest einen Maschinenraum für die Brennstoffzelle und zumindest einen Tankraum für den Brennstofftank aufweist. Der Maschinenraum kann mindestens zwei Brennstoffzellen aufweisen. Die Brennstoffzellen können übereinander angeordnet sein. Der Tankraum kann Speichermodule mit mindestens zwei Brennstofftanks umfassen. Die Brennstofftanks können insbesondere jeweils vertikal stehend positioniert sein.

Durch die Anordnung der Brennstofftanks in einem Tankraum und durch die Anordnung der Brennstoffzellen in einem Maschinenraum können die Brennstofftanks sowie die Brennstoffzellen von dem Passagierbereich baulich getrennt werden. Dadurch wird sichergestellt, dass kein Brennstoff zu den Passagieren dringen kann. Ausserdem kann der Tankraum und der Maschinenraum so akustisch isoliert bzw. gedämpft werden, was einen hohen Reisekomfort der Passagiere gewährleistet.

Es ist möglich, dass der Maschinenraum neben dem Tankraum angeordnet ist. Durch diese Anordnung sind nur sehr kurze Brennstoffleitungen notwendig. Durch die kurzen Brennstoffleitungen ist diese Bauweise äusserst einfach und Defekte können vermieden werden. Der Zugang zu den Maschinenräumen für Wartungszwecke kann über Wartungsluken gewährleistet werden, die an einer oder an beiden Seiten des Schienenfahrzeugs angeordnet sind. Die Wartungsluken können in der Aussenwand des Schienenfahrzeugs angeordnet sein. Die Wartungsluken können im Wesentlichen einen Grossteil der Lateralfläche des Powerpacks einnehmen. Dies ist möglich, da die strukturelle Stabilität des Passagierraums im Wesentlichen durch die innere Wand zwischen Passagierraum (Gang) und Maschinenraum bzw. durch die Wand zwischen Passagierraum (Gang) und Tankraum gewährleistet wird. Es ist möglich, dass auch die Wand zwischen Maschinenraum und Passagierraum (Gang) und/oder die Wand zwischen Tankraum und Passagierraum (Gang) Wartungsluken umfasst.

Die Powerpacks sind so konzipiert, dass die Anzahl der Brennstoffzellen anpassbar ist und die Anzahl von Brennstofftanks anpassbar ist. In den Powerpacks können bevorzugt acht Brennstoffzellen eingebaut sein. Es können pro Maschinenraum vier Brennstoffzellen vorgesehen sein, so dass in einem Powerpack, welches zwei Maschinenräume aufweist, acht Brennstoffzellen angeordnet sind. Es ist möglich, in einem Powerpack eine, zwei, drei, vier oder eine andere Anzahl an Brennstoffzellen anzuordnen. Somit können je nach Energiebedarf des Schienenfahrzeuges mehr oder weniger Brennstoffzellen im Powerpack angeordnet sein. Es ist möglich in einem Powerpack eines Schienenfahrzeuges, welches lang und schwer ist und/oder aufgrund der Streckenführung (Steigung) eine hohe Leistung benötigt, mehr Brennstoffzellen einzubauen. Einem Powerpack eines Schienenfahrzeuges, welches weniger Leistung benötigt (wenige Wagen, wenig Gewicht, wenige Steigungen in der Strecke) können weniger Brennstoffzellen zugeordnet werden.

Es ist somit möglich, die Anzahl der Brennstoffzellen der benötigten Leistung des Schienenfahrzeugs unabhängig von der Anzahl an Brennstofftanks anzupassen, da die Anzahl der Brennstoffzellen geändert werden kann, ohne den Bauraum für die Brennstofftanks zu beeinflussen.

Auch die Anzahl der Brennstofftanks kann je nach Bedarf variiert werden. Wenn das Schienenfahrzeug beispielsweise auf einer kurzen Strecke pendelt und oft betankt werden kann, kann in das Schienenfahrzeug ein Powerpack mit einer an die Strecke angepassten niedrigen Speicherkapazität (wenige Brennstofftanks) in die Zugkomposition des Schienenfahrzeugs eingebaut werden. Wenn ein Schienenfahrzeug zwischen den Betankungsvorgängen längere Strecken zurücklegen soll, kann in das Schienenfahrzeug ein Powerpack mit einer auf die Strecke angepasste hohe Speicherkapazität (viele Brennstofftanks) eingebaut werden. Die Powerpacks können so je nach Bedarf in einer unterschiedlichen Grösse bzw. Länge mit einer unterschiedlichen, anpassbaren Brennstoffkapazität (Anzahl an Brennstofftanks) hergestellt werden. Durch den modularen Aufbau kann dies konstruktiv einfach und rasch erfolgen. Es ist möglich, dass ein Powerpack 56 Brennstofftanks aufweist. Dann sind in dem Powerpacks acht Speichermodule mit jeweils 7 Brennstofftanks angeordnet. Dann sind auf jeder Schienenfahrzeugseite vier Speichermodule angeordnet.

Die Anzahl an Brennstofftanks in einem Powerpack und die Anzahl an Brennstoffzellen in einem Powerpack kann somit im Wesentlichen unabhängig voneinander variiert werden. So ist es möglich, für jedes Schienenfahrzeug je nach Einsatz individuell und modular ein vorteilhaftes Verhältnis an Leistung (Anzahl Brennstoffzellen) und Brennstoffkapazität (Anzahl Brennstofftanks) zuzuordnen.

Ein Powerpack kann somit je nach Einsatz des Schienenfahrzeugs angepasst werden.

Das Schienenfahrzeug kann ein Regionalzug sein.

Die Brennstoffzellen können in vertikaler Richtung übereinander in dem Maschinenraum des Powerpacks eingebaut werden. Jeder Brennstoffzelle können dabei Hilfsbetriebe zugeordnet sein. Hilfsbetriebe können beispielsweise ein Luftfilter oder eine 750-Hochvoltinterface sein. Es ist auch möglich, dass die Hilfsbetriebe für mehrere Brennstoffzellen ausgebildet sind. Es ist möglich, dass Hilfsbetriebe für sämtliche Brennstoffzellen eines Maschinenraums vorgesehen sind. Dann ist einem Maschinenraum eine Anordnung von Hilfsbetrieben zugeordnet.

Das Powerpack kann ein erstes Energieversorgungssystem mit zumindest einer Brennstoffzelle und einem Brennstofftank und ein zweites Energieversorgungssystem mit einer Brennstoffzelle und einem Brennstofftank umfassen. Die beiden Energieversorgungssysteme können unabhängig voneinander betreibbar ausgebildet sein.

Durch die Anordnung von zumindest einer Brennstoffzelle und mindestens eines Brennstofftanks in einem Energieversorgungssystem kann jedes Energieversorgungssystem unabhängig von einem anderen Energieversorgungssystem betrieben werden. Durch zwei Energieversorgungssysteme, die unabhängig voneinander ausgebildet sind ist es möglich, ein Schienenfahrzeug zu betreiben, selbst wenn eines der Energieversorgungssysteme ausgefallen ist. Möglicherweise ist die Leistung des Schienenfahrzeugs dann reduziert. Allerdings kann das Schienenfahrzeug aus eigener Kraft den nächsten Bahnhof erreichen, um dort Passagieren den Ausstieg zu ermöglichen.

Es ist möglich, dass das erste Energieversorgungssystem und/oder das zweite Energieversorgungssystem mehrere Brennstoffzellen und mehrere Brennstofftanks umfasst. Das erste Energieversorgungssystem und das zweite Energieversorgungssystem können identisch oder unterschiedlich ausgebildet sein. Dies bedeutet, dass das erste Energieversorgungssystem und das zweite Energieversorgungssystem die gleiche Anzahl an Brennstoffzellen und/oder Brennstofftanks aufweisen können oder dass das erste Energieversorgungssystem und das zweite Energieversorgungssystem eine unterschiedliche Anzahl an Brennstoffzellen und/oder Brennstofftanks aufweisen können.

Das Powerpack kann einen Gang aufweisen. Das Powerpack kann auch einen Mittelgang aufweisen. Der Mittelgang kann für Passagiere zugänglich sein. Der Mittelgang kann im Wesentlichen gasundurchlässig von dem Maschinenraum und/oder dem Tankraum abgeschlossen ausgebildet sein. Es ist möglich, dass jeweils ein Maschinenraum an einem Tankraum beidseitig des Ganges angeordnet ist. Dann ist jeweils ein Energieversorgungssystem pro Schienenfahrzeugseite ausgebildet.

Im Wesentlichen gasundurchlässig bedeutet, dass Gas nicht in grossen Mengen bzw. nur langsam in den Passagierraum gelangen kann. Falls Brennstoff in den Passagierraum gelangt, dann nur in sehr kleinen, unwesentlichen Mengen. Solche geringen Mengen verflüchtigen sich rasch und stellen im Wesentlichen keine Gefahr für Passagiere dar. So wird sichergestellt, dass im Wesentlichen kein Brennstoff in flüssiger oder gasförmiger Form in den Passagierbereich gelangen kann. Dadurch die Trennung von Passagierraum und dem Maschinenraum sowie dem Tankraum wird somit eine hohe Sicherheit für die Passagiere gewährleistet.

Durch die Anordnung von jeweils einem Energieversorgungssystem pro Schienenfahrzeugseite ergibt sich eine vorteilhafte Gewichtsverteilung.

Das Schienenfahrzeug kann eine Betankungsvorrichtung aufweisen. Die Betankungsvorrichtung kann mit dem Brennstofftank verbunden sein. Die Betankungsvorrichtung kann einen rechten Betankungsstutzen aufweisen, der von der rechten Seite der Längsachse des Powerpacks zugänglich ist. Die Betankungsvorrichtung kann gleichzeitig auch einen linken Betankungsstutzen aufweisen, der von der linken Seite der Längsachse des Powerpacks zugänglich ist.

Durch die Betankungsvorrichtung kann das Schienenfahrzeug betankt werden. Das Vorhandensein von einem rechten Betankungsstutzen und einem linken Betankungsstutzen ermöglicht es, das Schienenfahrzeug von beiden Seiten zu betanken. Dies ist besonders vorteilhaft, weil in einem Schienennetz je nach Fahrtrichtung des Schienenfahrzeugs die Tankstelle auf der rechten oder linken Seite des Schienenfahrzeugs angeordnet sein kann. Durch die beidseitige Anordnung der Betankungsstutzen kann das Schienenfahrzeug sowohl von der rechten Seite als auch von der linken Seite betankt werden und ein aufwendiges Wenden des Schienenfahrzeugs wird vermieden.

Es ist möglich, dass pro Schienenfahrzeugseite bzw. pro Tankraum mehrere Betankungsstutzen verbaut sind. Durch das Vorhandensein von mehreren Betankungsstutzen auch auf der gleichen Schienenfahrzeugseite ist es möglich, die Betankungszeit zu verkürzen. Es ist möglich, dass die Betankung mit einem Druck von im Wesentlichen 350 bar erfolgt. Dann kann das Schienenfahrzeuges von beiden Seiten gleichzeitig betankt werden. Es ist möglich, dass das Schienenfahrzeug auf jeder Seite mittels mehrerer Betankungsstutzen betankt wird. Durch eine solche Vorgehensweise kann die Betankungszeit deutlich verkürzt werden.

Es ist möglich, dass das Schienenfahrzeug jeweils pro Energieversorgungssystem eine Betankungsvorrichtung aufweist.

Damit kann das Schienenfahrzeug vorteilhaft und schnell betankt werden.

Es ist möglich, dass das erste Energieversorgungssystem des Schienenfahrzeugs eine erste Steuerung umfasst und dass das zweite Energieversorgungssystem des Schienenfahrzeugs eine zweite Steuerung umfasst.

Auf Grund der Redundanz der Steuerungen ist es möglich, die Energieversorgungssysteme unabhängig voneinander zu betreiben. Durch die Redundanz der Steuerungen kann das Schienenfahrzeug somit auch noch seinen Weg fortsetzen und den nächsten Bahnhof oder eine Werkstatt erreichen, wenn eines der Energieversorgungssysteme ausfällt.

Es ist möglich, dass das Powerpack mehrere Überdruckkomponenten umfasst, welche jeweils mit der Steuerung interagieren. Es ist möglich, dass das Powerpack ein Drucksensor umfasst, der einen bestimmten Überdruck (z.B. grösser als 12 bar) in einer Leitung detektiert, ein entsprechendes Signal an die Steuerung sendet, welche anschliessend ein Signal zur Schliessung von einem der Leitung zugeordneten Ventil sendet. Der Drucksensor ist in einer Leitung an einem Ort angeordnet, welcher sich beim Betrieb des Energieversorgungssystems stromabwärts eines einem Brennstofftank zugeordneten Druckminderers befindet. Es ist somit möglich, dass die Brennstofftanks höhere Drücke aufweisen, ohne dass der Sensor in der Leitung dies detektiert.

Es ist auch möglich, dass das Schienenfahrzeug ein Überdruckventil aufweist. Das Überdruckventil kann so ausgebildet sein, dass es sich bei einem bestimmten Überdruck (z.B. grösser als 14 bar) in einer Leitung öffnet und den überschüssigen Brennstoff über das Dach des Schienenfahrzeugs abgeleitet wird. Auch das Überdruckventil befindet sich beim Betrieb des Energieversorgungssystems stromabwärts eines einem Brennstofftank zugeordneten Druckminderers. Es ist somit möglich, dass die Brennstofftanks höhere Drücke aufweisen, ohne dass das Überdruckventil auslöst. Somit kann es bei dem Überdruckschutz mehrere Stufen geben. In der ersten Stufe wird zunächst ein relevantes Ventil geschlossen, so dass kein weiterer Brennstoff in die Leitung mit dem detektierten Überdruck gelangen kann. Steigt der Druck in der Leitung weiter, wird in der zweiten Stufe der Druck über ein Überdruckventil abgelassen.

So wird zunächst in der ersten Stufe versucht den Druck zu regulieren, ohne dabei Brennstoff an die Umwelt zu emittieren. Führt dies nicht zu dem gewünschten Erfolg, kann der Druck in einer zweiten Stufe abgelassen werden. So ist es äusserst unwahrscheinlich, dass Leitungen oder andere Komponente durch einen Überdruck zum Bersten gebracht werden. Ausserdem ist durch das mehrstufige Verfahren der Vorrichtung gewährleistet, dass es gleichsam unwahrscheinlich ist, dass zur Druckregulierung Brennstoff an die Umwelt emittiert wird. Insgesamt ergibt sich so eine Vorrichtung, bei der es äusserst unwahrscheinlich ist, dass Leitungen oder andere Komponenten durch einen Überdruck Bersten oder dass Brennstoff an die Umwelt emittiert werden muss. Dadurch wird sowohl für die Passagiere als auch für die Umwelt ein hohes Mass an Sicherheit gewährleistet.

Es ist möglich, dass der Brennstofftank bei Überlast verschiebbar ausgebildet ist. Es ist auch möglich, dass eine Brennstofftankgerüst bei Überlast verschiebbar ausgebildet ist.

Mit einer Überlast sind mechanische Lasten gemeint, die deutlich höher sind als die gewöhnlichen mechanischen Lasten im Normalbetrieb. Es ist auch möglich, dass die Brennstofftanks erst bei einer Überlast verschiebbar sind, welche bei besonders schweren Kollisionen auftritt. Dann sind die Brennstofftanks bei leichten Kollisionen unverschiebbar ausgebildet.

Bei einem Crash wird somit zumindest ein Teil der auftretenden Energie durch eine Verschiebung der Brennstofftanks bzw. durch die Verformung des Brennstofftankgerüsts absorbiert. Durch die Verschiebbarkeit der Brennstofftanks bzw. die Verschiebbarkeit der Brennstofftankgerüste müssen die Brennstofftanks nur einen Bruchteil der Energie aufnehmen, die sie ohne eine Verschiebbarkeit aufnehmen müssten. Somit werden die Kräfte, die im Fall eines Crashs auf den Brennstofftank ausgeübt werden, minimiert. Dadurch wird gewährleistet, dass die Brennstofftanks nur ein Minimum an Crashenergie absorbieren müssen. Somit ist es äusserst unwahrscheinlich, dass die Brennstofftanks durch äussere mechanische Einwirkung verformt oder zum Bersten gebracht werden. Es ist möglich, dass die Brennstofftanks nach der Verschiebung aneinander anliegen und sich gegenseitig durch Formschluss stützen.

Es ist möglich, dass zumindest zwei Brennstofftanks auf einem Speichermodul montiert sind, wobei das Speichermodul ein gleichzeitiges Ein- und Ausbauen der darauf montierten Brennstofftanks ermöglicht. Das Speichermodul kann zum Ein- und Ausbau verschiebbar im Powerpack gelagert sein. In seiner Einbauposition kann das Speichermodul im Powerpack lösbar befestigbar sein.

Dadurch ist es möglich das Schienenfahrzeug je nach Bedarf mit Speichermodulen auszustatten. Durch das Zusammenfassen von Brennstofftanks zu einem Speichermodul können mehrere Brennstofftanks gleichzeitig ein- oder ausgebaut werden. Dadurch ist der Ein- bzw. Ausbau einfach und effizient.

Bevorzugt weist ein Speichermodul eine ungerade Anzahl an Brennstofftanks auf. Dann können die im Wesentlichen zylinderförmigen Brennstofftanks eines Speichermoduls alternierend und somit platzsparend angeordnet werden.

Mit Speichermodulen sind Bündel gemeint. Ein Speichermodul mit sieben Brennstofftanks ist somit beispielsweise ein Bündel aus sieben Brennstofftanks.

Ein Speichermodul umfasst eine vorbestimmte Anzahl von Brennstofftanks. Die Brennstofftanks eines Speichermoduls können in der Halterungsvorrichtung des Speichermoduls oben und unten befestigt sein. Der Anschluss des Speichermoduls ist zur Verbindung mit einem fahrzeugseitigen Brennstoffleitsystem bestimmt. Das Brennstoffleitsystem verbindet im Wesentlichen die Brennstofftanks mit den Brennstoffzellen.

Die Speichermodule können so ausgebildet sein, dass jedes Speichermodul an einem für die Montage vorgesehenen Platz montiert werden kann. Dadurch wird eine hohe und rasche Austauschbarkeit und eine gute Reparierbarkeit und Wartbarkeit gewährleistet. Das Brennstofftankgerüst des Speichermoduls kann einen geschweissten Rahmen, beispielsweise aus S355 Stahl, sowie zwei Verstärkungselemente im oberen Bereich zum Schutz der Tankventile umfassen. Ausserdem kann das Speichermodul einen Kabelstrang umfassen, welcher verschiedene Strom- bzw. Signalkabel zusammenfasst, wobei vorzugsweise zu jedem Brennstofftank zumindest ein Stromkabel und ein Signalkabel verläuft.

Das Speichermodul kann auch eine Brennstoffhauptleitung umfassen, welche die Tanks verbindet. Jedes Speichermodul kann an seiner Ober- und Unterseite mit Dämpfern, bevorzugt Metalldämpfern, im Schienenfahrzeug befestigt sein.

Durch diese Bauart mit Speichermodulen ist die Reichweite des Schienenfahrzeugs einfach an die Anforderungen des Betreibers anpassbar, indem modular zusätzliche Speichermodule hinzugefügt werden. Es ist somit möglich, dass die Länge des Powerpacks variiert, je nachdem wo das Schienenfahrzeug eingesetzt wird. Damit ist gemeint, dass je nach Einsatz des Schienenfahrzeugs ein kurzes Powerpack oder ein langes Powerpack in das Schienenfahrzeug integriert werden kann. Die Länge eines Powerpacks bleibt im Wesentlichen unverändert, nachdem es hergestellt ist.

Ein Schienenfahrzeug, welches an einer Strecke mit weiten Entfernungen der Tankstelle oder grossen Steigungen eingesetzt wird, kann somit mit mehr Speichermodulen ausgestattet sein. Ein Schienenfahrzeug, welches auf einer flachen Strecke, bei der wenig Treibstoff benötigt wird, eingesetzt wird oder auf einer Strecke, an der sich viele Tankstellen befinden, kann mit wenigen Speichermodulen ausgestattet sein. Durch eine Anordnung von mehr oder weniger Speichermodulen wird der Bauraum für die Brennstoffzellen im Wesentlichen nicht tangiert. Dies gewährleistet, dass die Anzahl an Speichermodulen im Powerpack einfach und leicht erweitert oder reduziert werden kann. Somit kann der Zug durch die Anpassung der Anzahl an Speichermodulen des Powerpacks einfach und effizient und ohne Wesentliche Auswirkungen auf die übrigen Komponenten des Schienenfahrzeuges an die jeweiligen Verhältnisse angepasst werden.

Es ist somit möglich, den zur Verfügung stehenden Platz für Brennstofftanks bedarfsgerecht zu variieren. Bevorzugt kann die Länge des Powerpacks in Schritten variiert werden, die der Länge eines Speichermoduls entsprechen. So kann es möglich sein, immer nur komplette Speichermodule zu einem Powerpack hinzuzufügen. Es kann somit Powerpacklängen für beispielsweise ein, zwei, drei, vier, fünf, sechs, sieben oder acht oder mehr Speichermodule geben. Die Powerpacklängen können somit auf eine ganze Anzahl an Speichermodulen angepasst sein. Für eine gute Bauraumnutzung werden die Speichermodule gleichmässig auf die Tankräume auf den beiden Schienenfahrzeugseiten aufgeteilt. Besonders gut wird der Bauraum genutzt, wenn sich in dem Tankraum auf der rechten Schienenfahrzeugseite und in dem Tankraum auf der linken Schienenfahrzeugseite jeweils die gleiche Anzahl an Speichermodulen befindet. Dann kann die Länge des Powerpacks in Schritten variiert werden, die jeweils einer geraden Anzahl an Speichermodulen entsprechen.

Die Speichermodule können im Schienenfahrzeug mittels Montageschlitten verschoben werden. Die Führungsschienen dafür können fix im Schienenfahrzeug verbaut sein. Im Einbau kann jeweils ein komplettes Speichermodul auf den Montageschlitten aufgesetzt werden. Der Montageschlitten wird in die Einbauposition des Speichermoduls verfahren. Schliesslich wird das Speichermodul abgesetzt und der Montageschlitten wird wieder entfernt. Das so exakt positionierte Speichermodul wird anschliessend verschraubt und an die nötigen Versorgungsleitungen angeschlossen. Mit den nötigen Versorgungsleitungen sind insbesondere eine Brennstoffleitung, eine Brennstoffentlastungsleitung, eine Stromleitung und eine Steuerungsleitung für Sensoren gemeint. Es ist möglich, dass alle Strom- und Steuerungsleitungen in einem Leitungsbündel bzw. einem Stecker zusammengefasst sind.

Die Brennstofftanks können über eine Brennstoffhauptleitung miteinander verbunden sein. Die Brennstofftanks können senkrecht eingebaut werden. Senkrecht eingebaut bedeutet, dass die Längsachse der Brennstofftanks bei einer horizontalen Ausrichtung des Schienenfahrzeugs auf einer horizontal angeordneten Schiene im Wesentlichen senkrecht ausgebildet sind.

Die Brennstofftanks können über ein Brennstoffverteilsystem befüllt und entleert werden.

Auf dem Dach des Powerpacks kann eine Kühlanlage für die Brennstoffzellen ausgebildet sein. Dies bedeutet, dass sich Hauptbestandteile der Kühlanlage auf dem Dach des Powerpacks befinden.

Es ist möglich, dass die Kühlanlage in mehreren Bereichen des Powerpacks ausgebildet ist.

Das Powerpack kann über zwei Typen von Kühlkreisläufen verfügen. Ein Kühlkreislauf kann ein HT-Kühlkreislauf (High Temperature) sein. Ein anderer Kühlkreislauf kann ein LT-Kühlkreislauf (Low Temperature) sein. Jeder Brennstoffzelle kann ein HT-Kühlkreislauf zugeordnet sein. Mehreren Brennstoffzellen eines Maschinenraums kann ein LT-Kühlkreislauf zugeordnet sein. Ein Powerpack mit zwei Maschinenräumen weist dann zwei LT-Kühlkreisläufe und eine Vielzahl an HT-Kühlkreisläufen auf. Die Anzahl an HT-Kühlkreisläufen entspricht der Anzahl an Brennstoffzellen in dem Powerpack.

Einem HT-Kühlkreislauf kann ein Wärmetauscher, ein Temperatursensor, ein Brennstoffsensor, ein Lüfter mit Lüftermotor sowie ein Expansionsgefäss mit einem Level-Sensor zugeordnet sein. Es ist möglich, dass die Brennstoffzelle eine Wasserpumpe aufweist. Die Kühlluft kann durch ein Lüftungsgitter seitlich im Dachbereich des Powerpacks angesogen werden. Ausserdem kann die Kühlluft über den Maschinenraum an seitlichen Lüftungsgittern angesogen werden.

Der LT-Kühlkreislauf kühlt Elektrokomponenten des Powerpacks. Der LT-Kühlkreislauf kühlt beispielsweise einen Kompressor sowie eine Kompressorsteuerung in dem Powerpack. Der LT-Kühlkreislauf kann somit zusätzlich zu den Brennstoffzellen weitere Bauteile des Powerpacks kühlen. Die LT-Kühlanlage kann im Wesentlichen im unteren Bereich des Powerpacks angeordnet sein. Die Luft für die LT-Kühlanlage kann seitlich angesogen und fahrzeugmittig oben oder fahrzeugmittig unten ausgeblasen werden. Die LT-Kühlanlage kann vom Brennstoffbereich abgetrennt sein. Die HT-Kühlanlage kann explosionsgeschützt ausgebildet sein. Es ist auch möglich, dass beide Kühlanlagen, also sowohl die HT-Kühlanlage als auch die LT-Kühlanlage explosionsgeschützt ausgebildet sind.

Die Brennstofftanks können in den seitlichen Tankräumen des Powerpack untergebracht werden. Die Brennstofftanks können als Kohlefaserbrennstofftanks ausgebildet sein. Es ist möglich, dass die Brennstofftanks jeweils 6 - 7 kg, insbesondere ca. 6 kg Brennstoff bei einem Nenndruck von 350 bar mitführen.

Es ist möglich, dass die Brennstofftanks mit einer thermischen Druckentlastungsvorrichtung ausgerüstet sind. Eine solche Druckentlastungsvorrichtung entlässt Druck aus dem Brennstofftank, wenn eine bestimmte Temperatur überschritten wird. Die Auslösetemperatur der Druckentlastungvorrichtung liegt deutlich unter der Bersttemperatur des Brennstofftanks. Es ist somit im Wesentlichen unmöglich, dass die Bersttemperatur in einem Brennstofftank, der mit einer Druckentlastungsvorrichtung ausgestattet ist, effektiv erreicht wird. Selbst wenn der Druck in den Brennstofftanks erhöht wird, beispielsweise indem die Brennstofftanks bei einem Brand erhitzt werden, kann ein Bersten der Brennstofftanks somit weitestgehend ausgeschlossen werden. Es ist möglich, dass die Druckentlastungsvorrichtungen von mehreren Brennstofftanks, beispielsweise von den Brennstofftanks eines Speichermoduls, mit einer Leitung verbunden werden, welche auf das Dach des Schienenfahrzeugs führt. Dann kann der Brennstoff im Fall eines Überdrucks über das Dach entweichen. So wird die Wahrscheinlichkeit, dass bei dem Entweichen des Überdrucks Passanten gefährdet werden, minimiert.

Der Tankraum kann vom Passagierraum mittels einer eingeschweissten Wand abgetrennt sein. Die eingeschweisste Wand kann eine umlaufende Schweissnaht aufweisen. Im Betrieb wird der Tankraumpermanent zwangsbelüftet. Die Lufteinlässe können sich in der Aussenwand im unteren Bereich befinden. Die Ventilatoren können sich im Dachbereich befinden. Die Ventilatoren können auch zur Kühlung der Brennstoffzellen verwendet werden. Dann wird durch die Ventilatoren sowohl der Maschinenraum als auch der Tankraum belüftet.

Der Bereich des Powerpacks, in dem sich Brennstoff befindet (z.B. der Maschinenraum und der Tankraum), kann so ausgebildet sein, dass selbst im Fall eines Ausfalls der Zwangsbelüftung bzw. in der Parkstellung oder auf Stand-by bei einem Brennstoffaustritt keine Brennstoffrückstände zurückbleiben. Vielmehr kann der Brennstoff selbstständig nach oben entweichen. Ausserdem ist es möglich, dass der Brennstoff durch den Boden des Powerpacks entweichen kann. Somit ist gewährleistet, dass selbst bei einem Rollover, das bedeutet, wenn der Wagenkasten bei einem Unfall auf dem Dach zu liegen kommt, der Brennstoff entgegen der Schwerkraft nach oben durch den Boden des Schienenfahrzeugs entweichen kann. Somit ist gewährleistet, dass der Brennstoff selbst bei einer Kopfüberposition des Schienenfahrzeugs ohne aktive technische Einrichtungen entweichen kann.

Um die Dichtigkeit der Brennstofftanks zu gewährleisten, kann durch einen Druckschalter sichergestellt werden, dass der Druck in den Brennstofftanks nicht unter 15 bar sinkt. Es ist somit möglich, dass der Druck in den Brennstofftanks überwacht wird, und der Druckschalter das Brennstofftankventil schliesst, sobald in einem oder mehreren Brennstofftanks 15 bar oder weniger vorhanden sind. Der Druckschalter befindet sich im Betrieb der Energieversorgungsvorrichtung stromaufwärts eines einem Brennstofftank zugeordneten Druckminderers. Somit kann stromabwärts in den Brennstoffleitungen ein geringerer Druck ausgebildet sein, ohne dass der Druckschalter auslöst.

Es ist möglich, dass das Powerpack Brennstoffsensoren, beispielsweise Wasserstoffsensoren, aufweist. Es ist möglich, dass ein oder mehrere Brennstoffsensoren pro Energieversorgungssystem vorgesehen sind. Dadurch kann eine Leckage erkannt werden. Es ist möglich, dass die Brennstoffsensoren eine 3-prozentige Brennstoffkonzentration erkennen und anschliessend durch die Steuerung die Zuführventile an der betroffenen Stelle des Powerpacks geschlossen werden. Es ist auch möglich, dass sich in den Brennstoffzellen Brennstoffsensoren befinden. Somit können auch in den Brennstoffzellen Leckagen entdeckt werden. Es ist möglich, dass das System so ausgebildet ist, dass ab einer Detektion von einer 2-prozentigen Brennstoffkonzentration die entsprechende Brennstoffzelle geordnet und kontrolliert heruntergefahren wird. Es ist auch möglich, dass ab einer Detektion von einer 3-prozentigen Brennstoffkonzentration die Brennstoffstelle notfallmässig sofort und rasch ausgeschaltet wird. Es ist auch möglich, dass das Schienenfahrzeug weitere Brennstoffsensoren aufweist.

Es ist möglich, dass mindestens zwei Speichermodule, insbesondere zwei Speichermodule pro Tankraum, ausgebildet sind.

Dadurch kann das Schienenfahrzeug lange und mit einer hohen Leistung betrieben werden.

Bevorzugt werden die Speichermodule möglichst gleichmässig auf die Tankräume in den verschiedenen Schienenfahrzeugseiten angeordnet. Dadurch ergibt sich eine vorteilhafte Gewichtsverteilung und eine effiziente Raumnutzung.

Es ist möglich, dass die Brennstofftanks eines Speichermoduls voneinander beabstandet sind und sich somit im Normalbetrieb nicht berühren.

Dadurch wird gewährleistet, dass sich die Tanks ausdehnen können, wenn die Temperatur steigt oder wenn die Brennstofftanks betankt werden. Somit ist es äusserst unwahrscheinlich, dass in den Brennstofftanks äussere Zwänge und Spannungen auftreten.

Die Brennstofftankventile sind so ausgebildet, dass sie die bei einem Crash auftretende Kräfte aufnehmen können. Dies können im Wesentlichen Scherkräfte sein. Es ist auch möglich, dass das Brennstofftankgerüst der Brennstofftanks so ausgebildet ist, dass es ab einer gewissen Kraft nachgibt. Im Crashfall ist es wie oben beschrieben dann möglich, dass sich die Brennstofftanks verschieben. Es ist auch möglich, dass die Brennstofftanks erst bei einem besonders schweren Crash verschiebbar ausgebildet sind. Durch das Verschieben der Brennstofftanks werden so die Kräfte, welche auf die Brennstofftanks einwirken, limitiert. Dadurch wird insbesondere vermieden, dass die Brennstofftankventile abreissen und so Brennstoff mit einem hohen Druck austritt. Es ist möglich, dass ein Brennstofftank quer zur Fahrtrichtung ungefähr 10 cm verrutschbar angeordnet ist. Es ist möglich, dass der Brennstofftank nach einem Verrutschen von ca. 5 - 8 cm durch andere Tanks oder durch andere Bauteile mittels Formschluss gestützt wird. Es ist auch möglich, dass die innerste Tankreihe ca. 2 - 5 cm nach Verschiebung quer zur Fahrtrichtung durch die Gangwand gestützt wird. Es ist möglich, dass die Verstärkungselemente eine Verschiebung der Brennstofftanks in Richtung der Verstärkungselemente von ca. 4 - 6cm zulassen können und die Brennstofftanks dann stützen.

Es ist möglich, dass das Schienenfahrzeug einen zweiten Passagierwagen umfasst, der mit dem Powerpack gekoppelt ist und insbesondere der erste und der zweite Passagierwagen jeweils über ein Jakobsdrehgestell mit dem Powerpack verbunden sind.

Die an das Powerpack mit einem Jakobsdrehgestell angeschlossene Wagen können Mittelwagen oder Endwagen sein.

Es ist auch möglich, dass das Schienenfahrzeug neben Jakobsdrehgestellen auch andere Drehgestelle umfasst. Es ist möglich, dass das Schienenfahrzeug Jakobsdrehgestelle sowie konventionelle Drehgestelle umfasst.

Die Jakobsdrehgestelle des Powerpacks können einen Drehzapfenabstand von 7200 mm, 9000 mm, bzw. 10800 mm aufweisen.

Es ist möglich, dass jeweils eine Brennstoffzelle auf einer ausziehbaren Plattform in einer Halterungsvorrichtung gelagert ist. Es ist möglich, dass die Halterungsvorrichtung auf Dämpfern gelagert ist.

Durch die ausziehbare Anordnung der Brennstoffzellen ist es einfach und unkompliziert, die Brennstoffzellen auszutauschen oder zu warten. Bei dem Austausch oder der Wartung der Brennstoffzellen müssen somit keine grösseren Umbaumassnahmen vorgenommen werden.

Es ist möglich, dass die Brennstoffzellen auf der ausziehbaren Plattform montiert sind und die ausziehbare Plattform mittels Teleskopauszug an den Halterungsvorrichtungen montiert sind. Die Brennstoffzellen können mittels Schrauben oder anderen lösbaren Befestigungsmitteln auf den ausziehbaren Plattformen montiert sein.

Die Dämpfer können Metalldämpfer sein. Die Dämpfer können aus Stahl oder einer anderen Metalllegierung bestehen.

Es ist möglich, dass jeder Brennstofftank durch ein festes Lager und ein loses Lager befestigt ist.

Durch eine solche Befestigung wird sichergestellt, dass der Brennstofftank sicher befestigt ist und sich trotzdem bei einer Erwärmung oder beim Betanken ausdehnen kann. Somit wird gewährleistet, dass die Brennstofftanks auch bei einer Ausdehnung oder bei einem Zusammenziehen durch keine Wesentlichen äusseren Kräfte und Zwänge beansprucht werden.

Die Brennstofftanks können an der Unterseite durch das Festlager mit dem Speichermodul verbunden sein. An der Oberseite können die Brennstofftanks mittels des losen Lagers befestigt sein. Loses Lager bedeutet, dass die Brennstofftanks in vertikaler Richtung beweglich gelagert sind.

Es ist möglich, dass in einer Aussenseite des Maschinenraums und/oder des Tankraums Verstärkungselemente angeordnet sind, die einen oberen Teil des Wagenkastens und einen unteren Teil des Wagenkastens verbinden.

Dadurch wird der Tankraum vor äusseren mechanischen Einwirkungen geschützt.

Es ist möglich, dass die Verstärkungselemente im unteren Bereich fest in dem Wagenkasten verbunden sind und im oberen Bereich schwimmend gelagert sind.

Die Struktur des Powerpacks kann so ausgebildet sein, dass sie die normativ geforderten Lastfälle erfüllt. Die Verstärkungselemente schützen den Innenraum des Schienenfahrzeugs. Im Crashfall wird die Energie durch die Verstärkungselemente im Wesentlichen gleichmässig auf mehrere Speichermodule verteilt. Dadurch wird gewährleistet, dass nicht ein Speichermodul ein Grossteil der Crashenergie aufnehmen muss. Vielmehr wird jeweils ein Speichermodul so gering wie möglich mit Crashenergie beaufschlagt. Die Verstärkungselemente können aus S355 Stahlprofilen und Blechen ausgebildet sein. Die Stahlprofile und Bleche können dieselbe Tiefe wie die Wagenkastenstruktur aufweisen. Dies bedeutet, dass der Wagenkasten und die Verstärkungselemente an der Aussenseite des Schienenfahrzeugs im Wesentlichen bündig abschliessen und sich so eine im Wesentlichen ebene Oberfläche ergibt. Es ist möglich, dass die Aussenwand des Wagenkastens eine Stärke von ca. 5 cm aufweist. Es ist möglich, dass die Verstärkungselemente eine Stärke von ca. 5 cm aufweisen. Die Stärke ist die Ausdehnung der Bauteile quer zur Fahrtrichtung.

Die Verstärkungselemente können an der Unterseite und an der Oberseite mit dem Wagenkasten verbunden sein. Im unteren Bereich können die Verstärkungselemente mit einem Festlager mit dem Wagenkasten verbunden sein. Dies bedeutet, dass die Verstärkungselemente so gelagert sind, dass im Bereich des Lagers Kräfte in jede Richtung sowie Drehmomente aufnehmen können. Die Verstärkungselemente können im unteren Bereich einen Formschluss mit dem unteren Anschluss aufweisen, beispielsweise durch eine Schraubverbindung.

Im oberen Bereich können die Verstärkungselemente mit einem Loslager mit dem Wagenkasten verbunden sein. Durch die Loslagerung wird gewährleistet, dass die Verstärkungselemente bei einer Wärmeausdehnung oder bei einer Verwindung des Wagenkastens nicht durch äussere Zwänge beaufschlagt werden. Somit kann eine Verformung oder eine Verwindung des Wagenkastens stattfinden, ohne, dass die Verstärkungselemente durch äussere Zwänge beansprucht werden.

Eine Lagerung mittels eines Loslagers bedeutet, dass die Verstärkungselemente im oberen Bereich schwimmend gelagert sind. Schwimmend gelagert bedeutet, dass die Verstärkungselemente in eine Richtung keine Kräfte aufnehmen können.

Die Verstärkungselemente sind dabei so angeordnet, dass ein Hindernis mit einer Länge von 2,4 m und einer Höhe von 152 mm von mindestens zwei Verstärkungselementen bzw. Wagenkastensäulen abgestützt wird. Der Abstand zwischen zwei Verstärkungselementen ist daher bevorzugt maximal 1m.

Die Brennstofftanks sowie die Betankungsvorrichtung können durch weitere Sicherungsmassnahmen geschützt sein.

Der Betankungsstutzen kann durch einen Rahmen geschützt sein. Die Betankungsbefestigung kann besonders stabil ausgebildet sein. Die einzelne Brennstofftanks können so ausgebildet sein, dass sie einem Druck standhalten, der deutlich über dem Betriebsdruck der Brennstofftanks liegt.

Es ist möglich, dass das Powerpack Beschleunigungssensoren und eine Ventilsteuerung umfasst. Es ist möglich, dass das Powerpack pro Energieversorgungssystem jeweils Beschleunigungssensoren und Ventilsteuerungen umfasst. Die Ventilsteuerung kann derartig ausgebildet sein, dass bei einer Überschreitung der zulässigen Beschleunigung alle Brennstofftankventile des Energieversorgungssystems, insbesondere alle Brennstofftankventile, schliessbar sind.

Dadurch wird bei einem Crash gewährleistet, dass keine grösseren Brennstoffleckagen auftreten.

Es ist möglich, dass im Falle einer Kollision die Beschleunigungssensoren im Powerpack den Crash feststellen. Wenn eine bestimmte Stosskraft bei dem Crash überschritten wurde, ist es möglich, dass alle Brennstoffzufuhrventile schliessbar sind. Dadurch wird sichergestellt, dass auch bei einem Unfall bzw. einer Kollision nur möglichst wenig Brennstoff austritt. Auch dadurch wird ein hohes Mass an Sicherheit gewährleistet.

Es ist möglich, dass der Tankraum Lüftungsöffnungen aufweist. Es ist auch möglich, dass der Tankraum eine aktive Belüftungsvorrichtung aufweist.

Dadurch wird gewährleistet, dass beim Austritt von geringen Mengen an Brennstoff der Brennstoff in die Umwelt des Schienenfahrzeugs geleitet wird und so keine grösseren Brennstoffansammlungen in dem Tankraum entstehen.

Die Erfindung wird in den folgenden Figuren näher erläutert. Es zeigt:
- Figur 1:: Eine Ansicht eines Wagenkastens eines Powerpacks,
- Figur 2:: eine Ansicht des Wagenkastens eines Powerpacks mit Brennstoffzellen und Lüftungsgittern,
- Figur 3:: ein Schienenfahrzeug mit einem Powerpack und zwei Endwagen,
- Figur 4:: eine Anordnung von Brennstofftanks auf einem Brennstofftankgerüst,
- Figur 5:: eine Draufsicht auf eine Anordnung von Brennstofftanks,
- Figur 6:: eine Ansicht eines Speichermoduls,
- Figur 7:: eine Ansicht eines Speichermoduls mit einem Schnitt eines Brennstofftanks,
- Figur 8:: eine schematische Darstellung eines Kühlsystems der Brennstoffzellen.

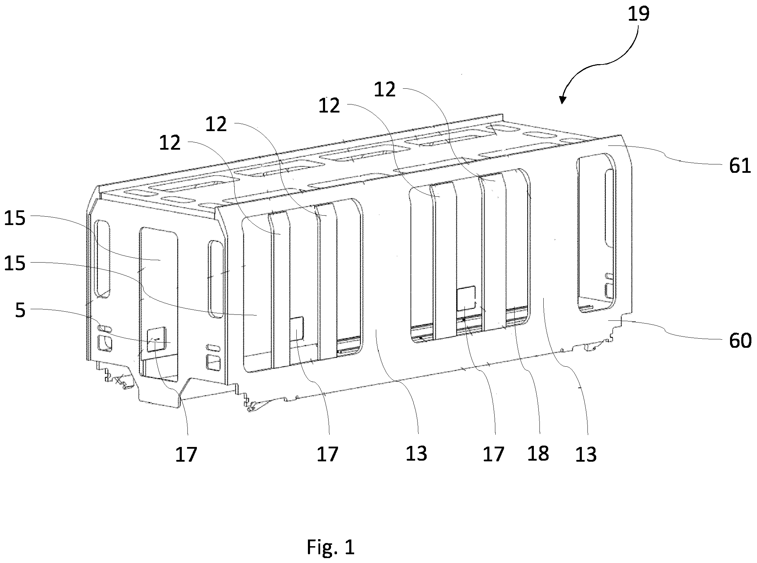

Figur 1 zeigt die Ansicht eines Wagenkastens 19 eines Powerpacks (nicht dargestellt). Der Wagenkasten 19 weist eine Vielzahl von Verstärkungselementen 12 auf. Ausserdem weist der Wagenkasten 19 Passagierraumwände 15 auf. In dem Passagierraumwänden 15 sind Wartungsluken 17 ausgebildet. Ferner weist der Wagenkasten 19 Wagenkastensäulen 13 auf. Der Wagenkasten 19 weist Führungen 18 für die Speichermodule (nicht dargestellt) auf. Die Verstärkungselemente 12 weisen eine Längsachse auf, welche im Wesentlichen vertikal ist. Die Wagenkastensäulen 13 weisen eine Längsachse auf, welche im Wesentlichen vertikal ist. Somit sind die Verstärkungselemente 12 und die Wagenkastensäulen 13 im Wesentlichen vertikal ausgerichtet. Die Wartungsluken 17 in der Passagierraumwand 15 ermöglichen es, von dem Mittelgang auf die Maschinenräume (5) zuzugreifen. Die Verstärkungselemente 12 schützen den Innenraum des Powerpacks 2 vor äusseren mechanischen Einwirkungen. Im Crashfall wird die auftretende Energie durch die Verstärkungselemente 12 teilweise auf mehrere Speichermodule (nicht dargestellt) verteilt. Ausserdem wird die auftretende Energie teilweise durch die Verstärkungselemente 12 in den Wagenkasten 19 eingeleitet. Die Verstärkungselemente 12 können aus S355 Stahlprofilen gefertigt sein. Die Strahlprofile können dieselbe Tiefe wie die Wagenkastenstruktur aufweisen. Die Verstärkungselemente 12 sind im unteren Bereich des Wagenkastens 19 mit ihrem unteren Ende fest mit dem unteren Teil 60 des Wagenkastens 19 verbunden. Die Verstärkungselemente 12 sind im oberen Teil 61 des Wagenkastens 19 mit ihrem oberen Ende durch ein Loslager gelagert. Loslager bedeutet, dass die Verstärkungselemente 12 durch das Loslager in Fahrtrichtung des Powerpacks 2 verschieblich gelagert und unverschieblich in einer Richtung quer zur Fahrtrichtung des Powerpacks 2 gelagert sind. Die Verstärkungselemente 12 können einen Abstand von maximal 1 m aufweisen.

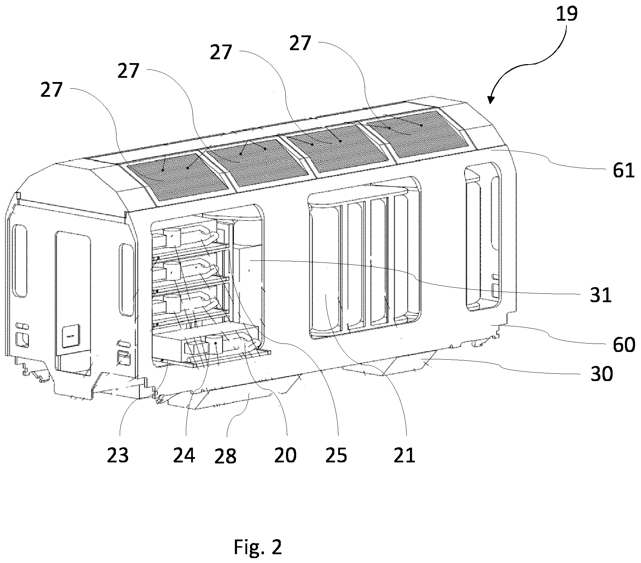

Figur 2 zeigt die Ansicht eines Wagenkastens 19 eines Powerpacks (nicht dargestellt) mit Brennstoffzellen 20 und Lufteinlässen 27. Auf dem Dach des Wagenkastens sind Lufteinlässe 27 ausgebildet. Am Unterboden des Wagenkastens 19 ist ausserdem ein Lüfter und Wärmetauscher 30 für die LT-Kühlung ausgebildet. Der Wagenkasten 19 weist ausziehbare Plattformen 23 auf. Die ausziehbaren Plattformen 23 sind in den Halterungsvorrichtungen 25 verschieblich angeordnet. An den Unterboden des Wagenkastens 19 ist ausserdem ein Wandler 28 ausgebildet. Das Powerpack 2 weist eine Druckregelungseinheit 31 auf. Die Verstärkungselemente 12 schützen den Innenraum des Powerpacks 2 vor äusseren mechanischen Einwirkungen. Im Crashfall wird die auftretende Energie durch die Verstärkungselemente 12 teilweise auf mehrere Speichermodule (nicht dargestellt) verteilt. Ausserdem wird die auftretende Energie teilweise durch die Verstärkungselemente 12 in den Wagenkasten 19 eingeleitet. Die Verstärkungselemente 12 können aus S355 Stahlprofilen gefertigt sein. Die Strahlprofile können dieselbe Tiefe wie die Wagenkastenstruktur aufweisen. Die Verstärkungselemente 12 sind im unteren Bereich des Wagenkastens 19 mit ihrem unteren Ende fest mit dem unteren Teil 60 des Wagenkastens 19 verbunden. Die Verstärkungselemente 12 sind im oberen Teil 61 des Wagenkastens 19 mit ihrem oberen Ende durch ein Loslager gelagert. Der Wagenkasten 19 weist Brennstofftanks 21 auf. Die Brennstofftanks 21 weisen Längsachsen auf, welche im Wesentlichen vertikal ausgerichtet sind. Die Brennstoffzellen 20 sind auf ausziehbaren Plattformen 23 des Powerpacks 2 angeordnet sind. Die ausziehbare Plattformen 23 sind in einer Halterungsvorrichtung 25 angeordnet. Somit sind die Brennstoffzellen 20 auf den ausziehbaren Plattformen 23, welche auf der Halterungsvorrichtung 25 angeordnet sind, aus dem Wagenkasten 19 ausziehbar. Auf der ausziehbare Plattform 23 sind für jede Brennstoffzelle 20 Hilfsbetriebe 24 für die Brennstoffzelle 20 angeordnet. Im ausgezogenen Zustand der Plattformen 23 kann die Brennstoffzelle 20 vorteilhaft gewartet bzw. ausgetauscht werden. Es sind vier Brennstoffzellen 20 übereinander auf ausziehbaren Plattformen 23 des Powerpacks (nicht dargestellt) angeordnet. Die Hilfsbetriebe 24 sind zwischen den Brennstoffzellen 20 und der Aussenwand des Wagenkastens 19 angeordnet.

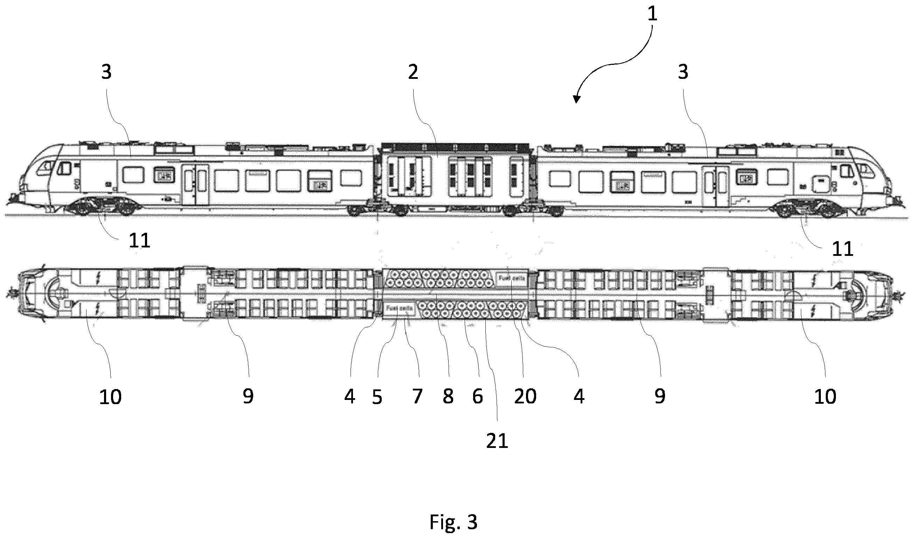

Figur 3 zeigt ein Schienenfahrzeug 1 mit einem Powerpack 2 und zwei Endwagen 3. Die Endwagen 3 weisen jeweils ein Motordrehgestell 11 auf, welches angetrieben ist. Bei den Motordrehgestellen 11 handelt es sich um konventionelle Drehgestelle. Das Powerpack 2 ist mit jedem der Endwagen 3 durch ein Jakobsdrehgestell verbunden. Das Powerpack 2 befindet sich zwischen den zwei Endwagen 3. Die Endwagen 3 weisen jeweils Stromrichter 10 für die Traktion auf. Ausserdem weisen die Endwagen 3 jeweils einen Passagierraum mit Vorrichtungen für den Aufenthalt von Passagieren, beispielsweise Sitzplätze, auf. Der Powerpack 2 weist keinen Raum für den dauernden Aufenthalt von Passagieren auf. Allerdings weist das Powerpack 2 einen Mittelgang 8 auf. Auf jeder Seite des Mittelgangs 8 des Powerpacks 2 sind jeweils ein Tankraum 4 für die Brennstofftanks 21 sowie ein Maschinenraum 5 für die Brennstoffzellen 20 angeordnet. Somit sind die Tankräume 4 der Brennstofftanks 21 sowie die Maschinenräume 5 der Brennstoffzellen 20 im Wesentlichen punktsymmetrisch angeordnet. Jeder Tankraum 4 für die Brennstofftanks 21 weist drei Speichermodule 6 auf. Ein Speichermodul 6 umfasst sieben Brennstofftanks 21.

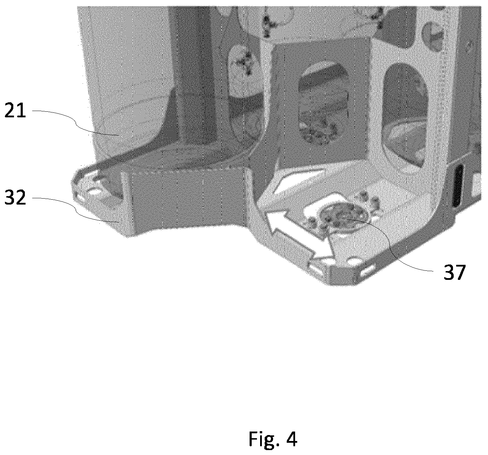

Figur 4 zeigt eine Anordnung von Brennstofftanks 21 auf einem Brennstofftankgerüst 32. Das Brennstofftankgerüst 32 weist einen Überlastmechanismus 37 auf. Die Brennstofftanks 21 sind voneinander beabstandet ausgebildet, so dass sie sich bei Erhitzung oder beim Betanken ausdehnen können. Die Längsachse der Brennstofftanks 21 ist im Wesentlichen vertikal angeordnet. Die Längsachsen der Brennstofftanks 21 sind somit im Wesentlichen parallel angeordnet. Die Brennstofftanks 21 sind bei Überlast verschiebbar in dem Brennstofftankgerüst 32 ausgebildet. Mit einer Überlast sind mechanische Lasten gemeint, die deutlich höher sind als die gewöhnlichen mechanischen Lasten im Normalbetrieb. Bei einem Crash wird somit zumindest ein Teil der auftretenden Energie durch eine Verschiebung der Brennstofftanks 21 bzw. durch die Verformung des Brennstofftankgerüsts 32 absorbiert. Durch die Verschiebbarkeit der Brennstofftanks 21 bzw. die Verschiebbarkeit des Brennstofftankgerüsts 32 müssen die Brennstofftanks 21 nur einen Bruchteil der Energie aufnehmen, die sie ohne eine Verschiebbarkeit aufnehmen müssten. Somit werden die Kräfte, die im Fall eines Crashs auf die Brennstofftankl 21 ausgeübt werden, minimiert. Dadurch wird gewährleistet, dass die Brennstofftanks 21 nur ein Minimum an Crashenergie absorbieren müssen. Somit ist es äusserst unwahrscheinlich, dass die Brennstofftanks 21 durch äussere mechanische Einwirkung verformt oder zum Bersten gebracht werden.

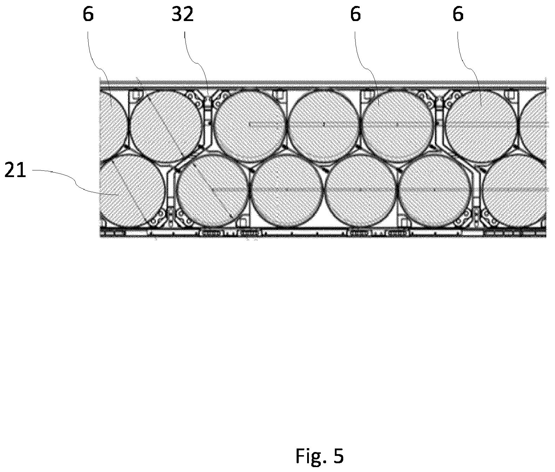

Figur 5 zeigt die Draufsicht auf eine Anordnung von Brennstofftanks 21. Die Brennstofftanks 21 sind in einem Brennstofftankgerüst 32 angeordnet. Die Längsachse der Brennstofftanks 21 ist im Wesentlichen vertikal. Das Speichermodul 6 weist sieben Brennstofftanks 21 auf. Das Speichermodul 6 ist mit sieben Brennstofftanks 21 vollständig gezeigt. Rechts und links des vollständig abgebildeten Speichermoduls 6 sind jeweils weitere Speichermodule 6 angeordnet, die jedoch nur teilweise gezeigt sind. Durch die Anordnung von Brennstofftanks 21 in einem Speichermodul 6 ist es möglich das Schienenfahrzeug (nicht dargestellt) je nach Bedarf mit Speichermodulen 6 auszustatten. Durch das Zusammenfassen von Brennstofftanks 21 zu einem Speichermodul 6 können mehrere Brennstofftanks 21 gleichzeitig ein- oder ausgebaut werden. Dadurch ist der Ein- bzw. Ausbau einfach und effizient. Das Speichermodul 6 weist eine ungerade Anzahl an Brennstofftanks 21 auf. Dadurch können die im Wesentlichen zylinderförmigen Brennstofftanks 21 des Speichermoduls 6 alternierend und somit platzsparend angeordnet werden.

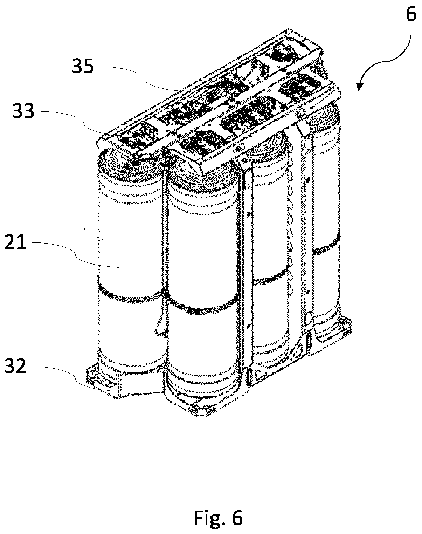

Figur 6 zeigt die Ansicht eines Speichermoduls 6. In dem Speichermodul 6 sind sieben Brennstofftanks 21 ausgebildet. Die sieben Brennstofftanks 21 sind auf einem Brennstofftankgerüst 32 angeordnet. Die Brennstofftanks 21 weisen jeweils Brennstofftankventile 33 auf, die an der Oberseite der Brennstofftanks 21 angeordnet sind. Die Brennstofftankventile 33 sind jeweils durch Sicherheitseinrichtungen 35 geschützt. Die Längsachse der Brennstofftanks 21 ist im Wesentlichen vertikal ausgebildet. Die Längsachsen der Brennstofftanks 21 sind im Wesentlichen parallel ausgerichtet. Das Speichermodul 6 weist eine ungerade Anzahl an Brennstofftanks 21 auf. Dadurch können die im Wesentlichen zylinderförmigen Brennstofftanks 21 des Speichermoduls 6 alternierend und somit platzsparend angeordnet werden. Es ist möglich, den zur Verfügung stehenden Platz für Brennstofftanks 21 bedarfsgerecht zu variieren. Bevorzugt kann die Länge des Powerpacks 2 in Schritten variiert werden, die der Länge eines Speichermoduls 6 entsprechen. So kann es möglich sein, immer nur komplette Speichermodule6 zu einem Powerpack 2hinzuzufügen. Es kann somit Powerpacklängen für beispielsweise ein, zwei, drei, vier, fünf, sechs, sieben oder acht oder mehr Speichermodule 6 geben. Die Powerpacklängen können somit auf eine ganze Anzahl an Speichermodulen 6 angepasst sein.

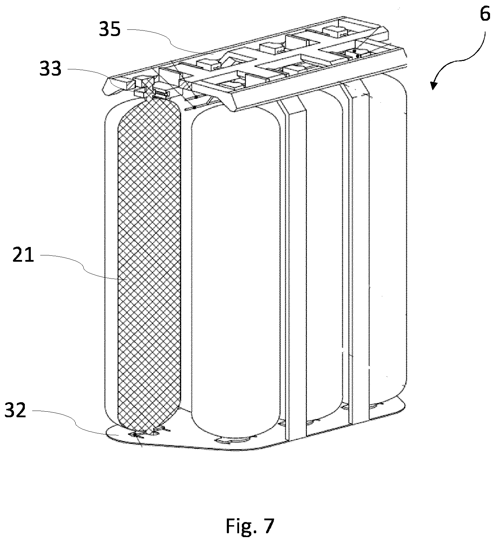

Figur 7 zeigt eine Ansicht eines Speichermoduls 6 mit einem Schnitt eines Brennstofftanks 21. In dem Speichermodul 6 sind sieben Brennstofftanks 21 ausgebildet. Die sieben Brennstofftanks 21 sind auf einem Brennstofftankgerüst 32 angeordnet. Die Brennstofftanks 21 weisen jeweils Brennstofftankventile 33 auf, welche auf der Oberseite der Brennstofftanks 21 angeordnet sind. Die Brennstofftankventile 33 sind jeweils durch Sicherheitseinrichtungen 35 geschützt. Die Längsachse der Brennstofftanks 21 ist im Wesentlichen vertikal. Die Längsachsen der Brennstofftanks 21 sind im Wesentlichen parallel ausgerichtet. Das Speichermodul 6 weist eine ungerade Anzahl an Brennstofftanks 21 auf. Die im Wesentlichen zylinderförmigen Brennstofftanks 21 des Speichermoduls 6 sind alternierend und somit platzsparend angeordnet.

Durch eine solche Anordnung von Brennstofftanks 21 in einem Speichermodul 6 ist es möglich, den zur Verfügung stehenden Platz für Brennstofftanks 21 bedarfsgerecht zu variieren. Die Länge des Powerpacks 2 kann in Schritten variiert werden, die der Länge eines Speichermoduls 6 entsprechen. So kann es möglich sein, immer nur komplette Speichermodule 6 zu einem Powerpack 2 hinzuzufügen. Es kann somit Powerpacklängen für beispielsweise ein, zwei, drei, vier, fünf, sechs, sieben oder acht oder mehr Speichermodule 6 geben. Die Powerpacklängen können somit auf eine ganze Anzahl an Speichermodulen 6 angepasst sein.

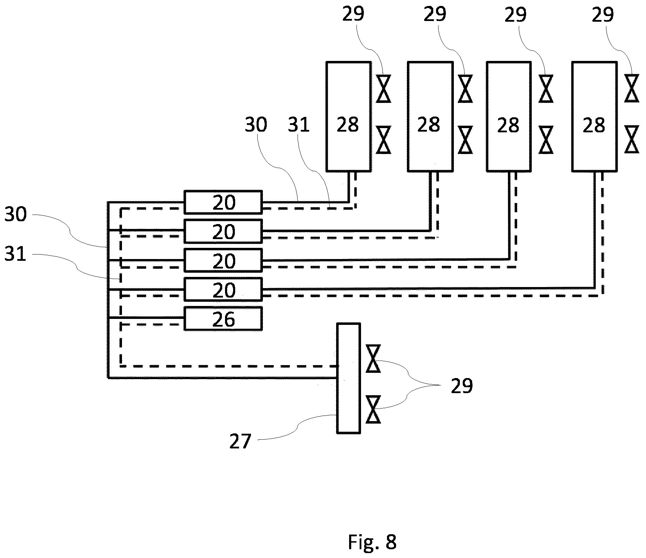

Figur 8 zeigt eine schematische Darstellung eines Kühlsystems der Brennstoffzellen 20. Vier Brennstoffzellen 20 ist ein LT-Kühlkreislauf 27 zugeordnet. Der LT-Kühlkreislauf 27 ist mit den Brennstoffzellen 20 jeweils über einen Vorlauf 30 und einen Rücklauf 31 verbunden. Der LT-Kühlkreislauf 27 kühlt ausserdem einen DC/DC-Wandler 26. Auch mit dem DC/DC-Wandler 26 ist der LT-Kühlkreislauf 27 mit einem Vorlauf 30 und einem Rücklauf 31 verbunden. Der LT-Kühlkreislauf 27 wird mittels zwei Ventilatoren 29 gekühlt. Jeder Brennstoffzelle 20 ist ein HT-Kühlkreislauf 28 zugeordnet. Den vier Brennstoffzellen 20 sind somit vier HT-Kühlkreisläufe 28 zugeordnet. Eine Brennstoffzelle 20 und ein HT-Kühlkreislauf 28 sind jeweils mittels eines Vorlaufs 30 und eines Rücklaufs 31 verbunden. Jedem HT-Kühlkreislauf 28 sind zwei Ventilatoren 29 zugeordnet. Die Ventilatoren 29 führen die Wärme aus den HT-Kühlkreisläufen ab. Den vier HT-Kühlkreisläufen 28 und dem LT-Kühlkreislauf 27 sind insgesamt zehn Ventilatoren 29 zugeordnet.

## Patentansprüche

1. Schienenfahrzeug (1) umfassend einen ersten Passagierwagen und ein Powerpack (2) mit einer Längsachse, wobei das Powerpack (2) und der Passagierwagen miteinander gekoppelt sind, wobei das Powerpack (2) zumindest eine Brennstoffzelle (20) und zumindest einen Brennstofftank (21) mit einem Brennstofftankventil (33) umfasst, wobei das Powerpack (2) auf mindestens einem Drehgestell gelagert ist und insbesondere keine Passagiersitzplätze umfasst, wobei das Schienenfahrzeug (1) zumindest ein angetriebenes Drehgestell umfasst, welches mit elektrischer Energie von der Brennstoffzelle (20) versorgbar ist.

2. Schienenfahrzeug (1) nach Anspruch 1, **dadurch gekennzeichnet, dass** das Powerpack (2) zumindest einen Maschinenraum (5) für die Brennstoffzelle (20) und zumindest einen Tankraum (4) für den Brennstofftank (21) aufweist, wobei der Maschinenraum (5) insbesondere mindestens zwei Brennstoffzellen (20) umfasst, die weiter insbesondere übereinander angeordnet sind, und wobei der Tankraum (4) insbesondere Speichermodule (6) umfassend mindestens zwei Brennstofftanks (21) umfasst, wobei die Brennstofftanks (21) insbesondere jeweils vertikal stehend positioniert sind.

3. Schienenfahrzeug (1) nach einem der vorhergehenden Ansprüche, **dadurch gekennzeichnet, dass** das Powerpack (2) ein erstes Energieversorgungssystem umfassend zumindest eine Brennstoffzelle (20) und einen Brennstofftank (21) und ein zweites Energieversorgungssystem umfassend zumindest eine Brennstoffzelle (20) und einen Brennstofftank (21) umfasst, wobei die zwei Energieversorgungssysteme insbesondere unabhängig voneinander betreibbar sind.

4. Schienenfahrzeug (1) nach einem der vorhergehenden Ansprüche, **dadurch gekennzeichnet, dass** das Powerpack (2) einen Gang (8), insbesondere einen Mittelgang (8) aufweist, der für Passagiere zugänglich ist und bevorzugt jeweils ein Maschinenraum (5) und ein Tankraum (4) beidseitig des Ganges (8) angeordnet sind und so jeweils ein Energieversorgungssystem pro Schienenfahrzeugseite ausgebildet ist.

5. Schienenfahrzeug (1) nach einem der vorhergehenden Ansprüche, **dadurch gekennzeichnet, dass** das Schienenfahrzeug (1) eine Betankungsvorrichtung aufweist, die mit dem Brennstofftank (21) verbunden ist und einen rechten Betankungsstutzen aufweist, der von der rechten Seite der Längsachse des Powerpacks (2) zugänglich ist und einen linken Betankungsstutzen aufweist, der von der linken Seite der Längsachse des Powerpacks (2) zugänglich ist.

6. Schienenfahrzeug nach Anspruch 5, **dadurch gekennzeichnet, dass** jeweils eine Betankungsvorrichtung pro Energieversorgungssystem ausgebildet ist.

7. Schienenfahrzeug nach einem der Ansprüche 3 bis 6, **dadurch gekennzeichnet, dass** das erste Energieversorgungssystem eine erste Steuerung umfasst und das zweite Energieversorgungssystem eine zweite Steuerung umfasst.

8. Schienenfahrzeug nach einem der vorhergehenden Ansprüche, **dadurch gekennzeichnet, dass** der Brennstofftank (21), insbesondere eine Befestigung des Brennstofftanks (21), bei Überlast verschiebbar ausgebildet ist.

9. Schienenfahrzeug (1) nach einem der vorhergehenden Ansprüche, **dadurch gekennzeichnet, dass** zumindest zwei Brennstofftanks (21) auf einem Speichermodul (6) montiert sind, wobei das Speichermodul (6) ein gleichzeitiges Ein- und Ausbauen ermöglicht und das Speichermodul (6) insbesondere zum Ein- und Ausbau verschiebbar im Powerpack (2) gelagert ist und bevorzugt in einer Einbauposition im Powerpack (2) lösbar befestigbar ist.

10. Schienenfahrzeug (1) nach einem der vorhergehenden Ansprüche, **dadurch gekennzeichnet, dass** das Schienenfahrzeug (1) einen zweiten Passagierwagen umfasst, der mit dem Powerpack (2) gekoppelt ist und insbesondere der erste und der zweite Passagierwagen jeweils über Jakobsdrehgestelle mit dem Powerpack (2) verbunden sind.

11. Schienenfahrzeug nach einem der vorhergehenden Ansprüche, **dadurch gekennzeichnet, dass** jeweils eine Brennstoffzelle (20) auf einer ausziehbaren Plattform (23) in einer Halterungsvorrichtung (25) gelagert ist, wobei Halterungsvorrichtung (25) insbesondere auf Dämpfern gelagert ist.

12. Schienenfahrzeug (1) nach einem der vorhergehenden Ansprüche, **dadurch gekennzeichnet, dass** jeder Brennstofftank (21) durch ein festes Lager und ein Loslager befestigt ist.

13. Schienenfahrzeug (1) nach einem der vorhergehenden Ansprüche, **dadurch gekennzeichnet, dass** an einer Aussenseite des Maschinenraums (5) und/oder des Tankraums (4) Verstärkungselemente (12) angeordnet sind, die einen oberen Teil (61) des Wagenkastens (19) und einen unteren Teil (60) des Wagenkastens (19) verbinden.

14. Schienenfahrzeug (1) nach einem der vorhergehenden Ansprüche, **dadurch gekennzeichnet, dass** das Powerpack (2) Beschleunigungssensoren und eine Ventilsteuerung, insbesondere jeweils Beschleunigungssensoren und eine Ventilsteuerung pro Energieversorgungssystem umfasst, wobei die Ventilsteuerung derartig ausgebildet ist, dass bei einer Überschreitung der zulässigen Beschleunigung alle Brennstofftankventile (33) des Energieversorgungssystems, insbesondere alle Brennstofftankventile (33), schliessbar sind.

15. Schienenfahrzeug (1) nach einem der vorhergehenden Ansprüche, **dadurch gekennzeichnet, dass** der Tankraum (4) Lüftungsöffnungen aufweist und insbesondere eine aktive Belüftungsvorrichtung aufweist.
